# EUROPEAN PATENT SPECIFICATION

(11) **EP 0 398 546 B1**
(45) Date of publication and mention of the grant of the patent: **09.06.1993**
(21) Application number: 90304762.9
(22) Date of filing: 01.05.1990
(51) Int. Cl.: F16D 65/34

(54) **Electrically actuated drum brake**
Elektrisch betätigte Trommelbremse
Frein à tambour actionné électriquement

(30) Priority: 17.05.1989 US 353120
(43) Date of publication of application: 22.11.1990
(73) Proprietor: GENERAL MOTORS CORPORATION, Detroit Michigan 48202 (US)
(72) Inventor: Shaw, Schuyler S., Dayton, Ohio 45414 (US); Hammersmith, Robert J., Rochester Hills, Michigan 4848064 (US); Hallinan, Linda L., Centerville, Ohio 45458 (US); Schenk, Donald E., Vandalia, Ohio 45377 (US); DeHoff, Edward J., Huber Heights, Ohio 45424 (US); Kade, Alexander, Grosse Pointe Woods, Michigan 48236 (US)
(74) Representative: Denton, Michael John

(56) References cited:
- FR-A- 2 296 792
- FR-A- 2 564 999

## Description

The field of the present invention is that of electrically actuated drum brakes for motor vehicles. More particularly the field of the present invention is that of an electrically actuated drum brakes having parking brakes.

It is known in the art to provide drum brakes for automotive vehicles. An example of a drum brake is shown and described in US-A-4,762,209. Electrically actuated drum brakes are described in US-A-4,295,687 and FR-A-2296792.

Many developments in automotive braking having occurred recently which require the brakes to be responsive to an electronic controller to provide traction control and or anti-lock braking for the vehicle. Since the more recent developments in this area have utilized electronic controls, it is only a logical progression to provide a vehicle brake which also relies upon electric actuation since electric actuation provides a vehicle brake which is inherently better matched for the digital electronic controls provided in many recent automotive vehicle braking arrangements.

The object of the present invention is to provide a vehicle drum brake better matched for the advanced braking systems available on many vehicles today by providing electrical actuation.

An electrically actuated drum brake in accordance with the present invention is characterised over FR-A-2296792 by the features specified in the characterising portion of Claim 1.

The present invention provides an electrically actuated drum brake having a parking brake.

The present invention will now be described, by way of example, with reference to the accompanying drawings, in which:-
Figure 1 is a front elevational view of a preferred embodiment of drum brake of the present invention;
Figures 2, 3, 5, 6 and 7 are taken along lines 2-2, 3-3, 5-5, 6-6 and 7-7 respectively of Figure 1; and
Figure 4 is a view taken along line 4-4 of Figure 3.

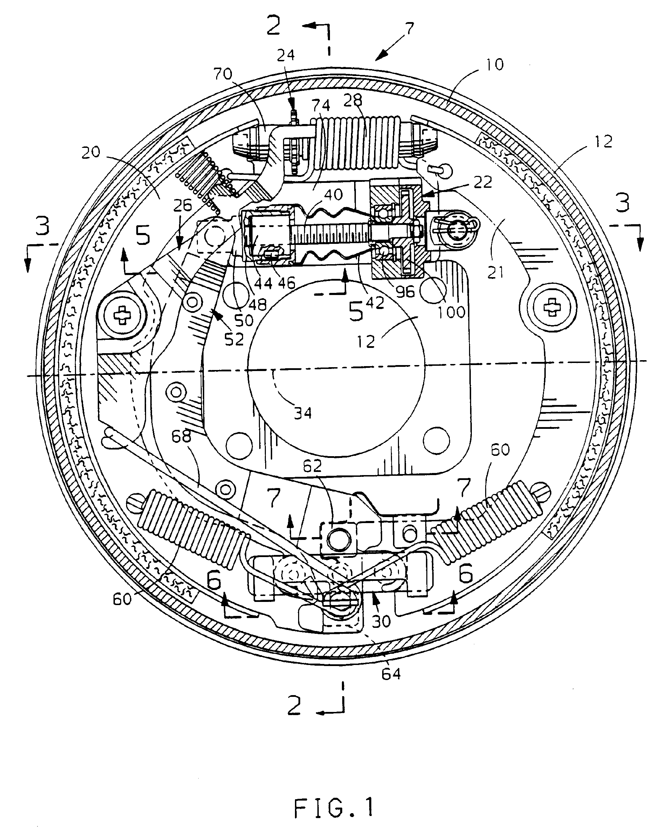

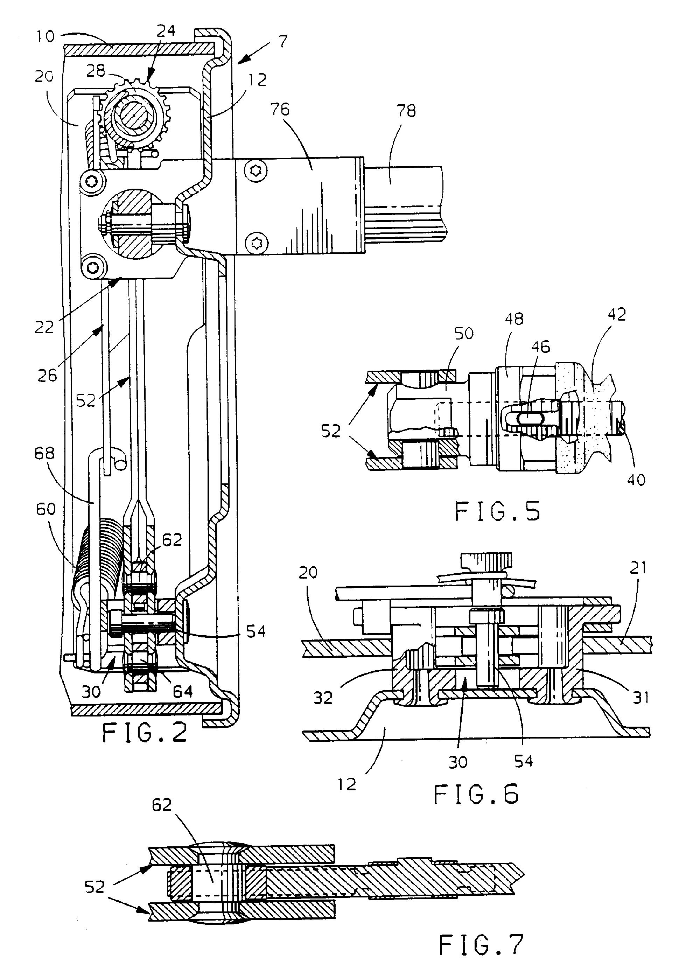

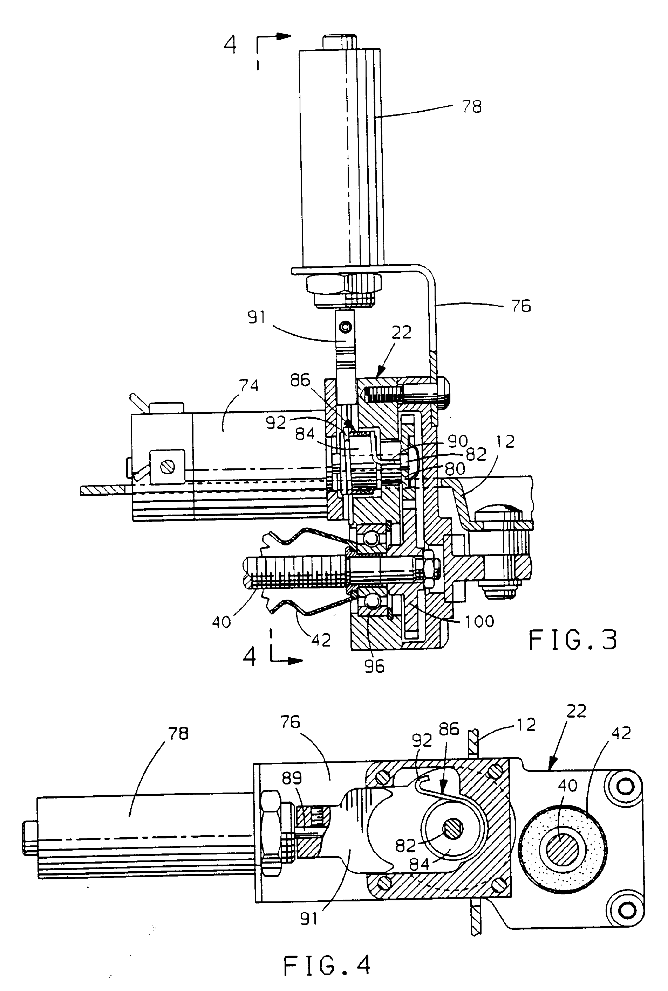

Referring to Figures 1-7 the drum brake 7 of the present invention has a conventional brake drum 10 (an outline of which is shown) which is provided for connection to the vehicle wheel. Mounted on the vehicle is a backing plate 12, traditionally mounted to the axial housing. Mounted by a spring loaded pin to bias them towards the backing plate 12 are secondary 20 and primary 21 shoes. The spacing between the primary and secondary shoes 21,20 is adjustably set by a screw and starwheel type adjuster 24 which is acted upon by a pawl 26 which is also pivotally connected with the backing plate 12. A spring 28 holds the primary 21 and secondary 20 shoes together on the top and surrounds the screw and starwheel adjuster 24. At their lower ends the primary 21 and secondary 20 shoes contact an anchor 30 with pins 31 and 32 which are fixed with respect to the backing plate 12. During actuation the primary and secondary shoes 21,20 split apart from one another away from the bottom anchor 30. A line 34 bisecting the drum brake 7 will separate the anchor 30 from the adjuster 24, with the anchor and adjuster substantially equidistant from the line. Rotatively mounted to the backing plate 12, and held in position by a bearing 96, is a power screw 40. The power screw 40 is covered by a boot 42 and is threadably engaged with a non-rotative nut 44. The nut 44 is keyed 46 into a frame 48 to prevent its rotation, but to allow it to slide in a linear direction. The frame 48 has an extension 50 (Figure 5) which is pivotally connected to an apply lever 52. The apply lever 52 is of the shape of a bent arm and has a loss motion pivotal connection with the backing plate 12 intermediate the two pins 31,32 of the anchor 30 via a pin 54.

Each shoe 20,21 has a return spring 60 urging that shoe towards the anchor 30. The apply lever 52 has pivotal movement with respect to the shoes 20,21 by shoe actuators 62, 64 which contact portions of the shoes. Movement of the non-rotative nut 44 to the right, as shown in the drawings, will cause the apply lever 52 to rotate clockwise causing the shoes 20,21 to be contacted and separated in an outward direction. The return spring 60 will cause the shoes 20,21 to return to the non-actuated position. The adjuster 24 is screw acted upon by the pawl 26, which is held by an adjuster pawl link 68, and will turn an adjuster nut 70 upon actuation of the drum brake 7. A frame 22 is provided which mounts an electric motor 74 to the backing plate 12. An extension 76 of that frame 22 mounts a mechanical or electrical hydraulic or thermal actuator 78. Electric motor 74 powers the power screw 40 via a shaft 82 and gears 80 and 100. Connected to the motor shaft 82 is a parking brake drum 84. Surrounding the parking brake drum 84 is a coil spring 86 which normally engages the parking brake drum 84 and which has one end 90 which is fixed relative to the frame 22. The coil spring 86 is configured in such manner that rotation of the shaft 82 of the motor in a direction to move the drum brake 7 to the non-activated position will cause the parking brake drum 84 to wrap in (be gripped by) the coil spring 86 and be restrained from rotation. Therefore, once the drum brake 7 is activated, the shoes 20,21 remain activated in the parking brake mode. To allow the relief of the activation of the shoes 20,21 the actuator 78 has a linear actuator rod 89 with a hand 91. Extension of the actuator rod 89 by the actuator 78 moves hand 91 into contact with the free end 92 of the coil spring 86, moving the coil spring to an unwound position (that is, expanding or increasing the diameter of the coil spring 86), therefore allowing free rotation of the parking brake drum 84 and hence free motion of the electric motor 74. The actuator 78 can be either a hydraulic actuator, or it can be a thermal actuator which uses a ceramic heater to heat a substance which impacts upon a diaphragm connected with the actuator rod 89. Typically, the drum brake 7 will be configured in such a manner that if a thermal actuator is utilized either the arrangement will be such that electric current is needed to allow the drum brake to relieve, or electric current will be needed to allow the wheels to initially relieve, however, there will be magnetic latchings which will allow the actuator 78 to be extended without a continual drain of current.

The operation of the drum brake 7 will now be described. The electric motor 74 powers the meshing gears 80,100 to turn the power screw 40. The power screw 40 is pivotally connected to the apply lever 52 which pivots around pin 54, which provides a lost motion connection. When the power screw 40 is rotated, the non-rotative nut 44 will slide with respect to the backing plate 12, thereby moving the apply lever 52, causing the shoe actuators 62,64 to move the shoes 20,21 with respect to the anchor 30 to actuate/release the drum brake.

The operation of the parking brake mechanism will now be described. During normal (that is, non-parking mode) of the drum brake 7, the hand 91 of the actuator 78 engages the free end 92 of the coil spring 86 to hold the coil spring 86 in a unwound position and allow free rotation of the shaft 82 by the electric motor. For parking brake mode, when the electric motor 74 is actuated to apply the shoes 20,21 to the brake drum 10, the actuator 78 is then actuated to move the hand 91 away from the free end 92 of the coil spring 86. The coil spring 86 therefore winds up (diametrically contracts) and frictionally binds with the parking brake drum 84 to lock the power screw 40, and hence the shoes 20,21, in the actuated position. The parking brake mode is released by actuating the actuator 78 to move the hand 91 into engagement with the free end 92 of the coil spring 86 to unwind the coil spring, and to allow the electric motor 74 to move the shoes 20,21 to the released position.

The actuator 78 is preferably electrically actuated. In this case, the actuator 78 is actuated, as required, by electric signals generated when the operator of the motor vehicle moves the parking brake switch or lever of the motor vehicle.

In all cases, the electric motor 74 is actuated, as required, by electric signals generated when the operator of the motor vehicle moves the brake pedal of the vehicle.

The screw and starwheel adjuster 24 and adjuster nut 70 are actuated by the pawl 26 for brake wear adjustment of the drum brake 7, and for setting the initial position of the shoes 20,21.

## Claims

1. An electrically actuated drum brake (7) comprising a brake drum (10) for connection to a wheel of a motor vehicle; a backing plate (12) for connection to the motor vehicle; at least one brake shoe (20,21) pivotally mounted on the backing plate for engaging the brake drum (10); a screw (40) threadably engaged with a nut (44), the screw and nut being mounted on the backing plate; and an electric motor (74); characterised in that the nut (44) is non-rotative, mounted for linear motion with respect the backing plate (12), and has means (52,54,62,64) of pivotal connection with the brake shoe (20,21); in that the electric motor (74) is drivingly connected with the screw (40) to turn the same to actuate the drum brake (7); and by a parking brake mechanism comprising a drum (84) fixedly interconnected with the power screw (40), the drum (84) being surrounded by a coil spring (86) fixed at one end (90), the coil spring, in its wound mode, frictionally gripping the drum (84) to prevent rotation of the shaft (82), and an actuator (78) connectable to the other end (92) of the coil spring (86) for moving the coil spring into a position generally unwinding the coil spring to restrain the coil spring from engagement with the drum.

2. An electrically actuated drum brake as claimed in claim 1, wherein the means of pivotal connection with the brake shoe (20,21) includes an apply lever (52) pivotally connected with the non-rotative nut (44), the apply lever having a shoe actuator (62,64) wherein pivotal movement of the apply lever causes the shoe actuator to move the brake shoe (20,21).

3. An electrically actuated drum brake as claimed in claim 2, comprising two brake shoes (20,21) movable by the apply lever (52).

4. An electrically actuated drum brake as claimed in claim 2 or claim 3, wherein the apply lever (52) has a lost motion connection (54) with the backing plate (12) generally on the opposite end of the apply lever to the connection with the non-rotative nut (44).

5. An electrically actuated drum brake as claimed in any one of claims 1 to 4, wherein the power screw (40) is connected by a gear train (80,100) with the electric motor (74), and wherein the electric motor has a shaft (82) mounted generally parallel with the power screw, the drum (84) being fixedly connected with the shaft.

6. An electrically actuated drum brake as claimed in any one of claims 1 to 5, wherein the actuator of the parking brake mechanism (78) is electrically actuated.

7. An electrically actuated drum brake as claimed in any one of claims 1 to 5, wherein the actuator of the parking brake mechanism (78) is mechanically actuated.

8. An electrically actuated drum brake as claimed in any one of claims 1 to 7, further comprising an adjuster (24,70) for adjustably setting the distance between the brake shoes (20,21).

## Patentansprüche

1. Elektrisch betätigte Trommelbremse (7) mit einer Bremstrommel (10) zur Verbindung mit einem Rad eines Kraftfahrzeugs; einer Grundplatte (12) zur Verbindung mit dem Kraftfahrzeug; zumindest einer Bremsbacke (20, 21), welche drehbar auf der Grundplatte zum Eingriff mit der Bremstrommel (10) befestigt ist; einer Schraube (40), welche verschraubbar mit einer Mutter (44) in Eingriff steht, wobei die Schraube und die Mutter auf der Grundplatte befestigt sind; und einem Elektromotor (74);
dadurch **gekennzeichnet**,
daß die Mutter (44) nicht verdrehbar ist, zur geradlinigen Bewegung bezüglich der Grundplatte (12) befestigt ist und Mittel (52, 54, 62, 64) zur schwenkbaren Verbindung mit dem Bremsbacken (20, 21) besitzt; daß der Elektromotor (74) antreibend mit der Schraube (40) verbunden ist, um diese zur Betätigung der Trommelbremse (7) zu drehen; und gekennzeichnet durch einen Parkbremsmechanismus mit einer Trommel (84), welche starr mit der Antriebsschraube (40) verbunden ist, wobei die Trommel (84) von einer Schraubenfeder (86) umgeben ist, welche an einem Ende (90) fixiert ist, die Schraubenfeder in ihrem zugewundenen Modus die Trommel (84) kraftschlüssig festhält, um eine Drehung der Welle (82) zu verhindern, und durch ein Betätigungsorgan (78), welches mit dem anderen Ende (92) der Schraubenfeder (86) verbindbar ist, um die Schraubenfeder in eine Position zu bewegen, in der die Schraubenfeder im allgemeinen aufgewunden ist, um die Schraubenfeder vom Eingriff mit der Trommel abzuhalten.

2. Elektrisch betätigte Trommelbremse nach Anspruch 1, wobei die Mittel zur schwenkbaren Verbindung mit der Bremsbacke (20, 21) einen Anwendungshebel (52) enthalten, welcher drehbar mit der nicht verdrehbaren Mutter (44) verbunden ist, wobei der Anwendungshebel ein Backenbetätigungsorgan (62, 64) besitzt und eine Drehbewegung des Anwendungshebels bewirkt, daß das Backenbetätigungsorgan die Bremsbacke (20, 21) bewegt.

3. Elektrisch betätigte Trommelbremse nach Anspruch 2, welche zwei Bremsbacken (20, 21) umfaßt, welche durch den Anwendungshebel (52) bewegbar sind.

4. Elektrisch betätigte Trommelbremse nach Anspruch 2 oder 3, wobei der Anwendungshebel (52) eine Leergangverbindung (54) mit der Grundplatte (12) besitzt, und zwar im allgemeinen an dem gegenüberliegenden Ende des Anwendungshebels zu der Verbindung mit der nicht verdrehbaren Mutter (44).

5. Elektrisch betätigte Trommelbremse nach einem der Ansprüche 1 bis 4, wobei die Antriebsschraube (40) durch ein Getriebe (80, 100) mit dem Elektromotor (74) verbunden ist, und wobei der Elektromotor eine Welle (82) besitzt, welche im allgemeinen parallel zu der Antriebsschraube befestigt ist, wobei die Trommel (84) mit der Welle starr verbunden ist.

6. Elektrisch betätigte Trommelbremse nach einem der Ansprüche 1 bis 5, wobei das Betätigungsorgan des Parkbremsmechanismus (78) elektrisch betätigt wird.

7. Elektrisch betätigte Trommelbremse nach einem der Ansprüche 1 bis 5, wobei das Betätigungsorgan des Parkbremsmechanismus (78) mechanisch betätigt wird.

8. Elektrisch betätigte Trommelbremse nach einem der Ansprüche 1 bis 7, welches weiter einen Einsteller (24, 70) zum einstellbaren Setzen des Abstandes zwischen den Bremsbacken (20, 21) umfaßt.

## Revendications

1. Frein à tambour (7) actionné électriquement comprenant un tambour (10) de frein pour être relié à une roue de véhicule à moteur; un plateau de fixation (12) pour être relié au véhicule à moteur; au moins un patin de frein (20, 21) monté oscillant sur le plateau de fixation pour s'engager avec le tambour (10) de frein; une vis (40) pouvant s'engager par filetage avec un écrou (44), la vis et l'écrou étant montés sur le plateau de fixation; et un moteur électrique (74); caractérisé en ce que l'écrou (44) est non rotatif, monté pour un déplacement linéaire par rapport au plateau de fixation (12), et comporte des moyens (52, 54, 62, 64) de liaison oscillante avec le patin de frein (20, 21); en ce que le moteur électrique (74) est relié à la vis (40) de façon à l'entraîner afin de la faire tourner et actionner le frein (7) à tambour; et par un mécanisme de frein de stationnement comprenant un tambour (84) relié de manière fixe avec la vis de transmission (40), le tambour (84) étant entouré d'un ressort hélicoïdal (86) fixé à une extrémité (90), le ressort hélicoïdal, dans son mode enroulé, bloquant par friction le tambour (84) pour empêcher la rotation de l'arbre (82), et un dispositif d'actionnement (78) pouvant être relié à l'autre extrémité (92) du ressort hélicoïdal (86) pour déplacer le ressort hélicoïdal dans une position qui déroule en général le ressort hélicoïdal pour empêcher ce ressort hélicoïdal de s'engager avec le tambour.

2. Frein à tambour actionné électriquement selon la revendication 1, dans lequel le moyen de liaison oscillante avec le patin de frein (20, 21) comporte un levier d'application (52) relié de façon oscillante avec l'écrou non rotatif (44), le levier d'application ayant un dispositif d'actionnement (62, 64) de patin dans lequel le mouvement d'oscillation du levier d'application conduit le dispositif d'actionnement de patin à déplacer le patin de frein (20, 21).

3. Frein à tambour actionné électriquement selon la revendication 2, comprenant deux patins de frein (20, 21) pouvant être déplacés par le levier d'application (52).

4. Frein à tambour actionné électriquement selon la revendication 2 ou la revendication 3, dans lequel le levier d'application (52) a une liaison à course morte (54) avec le plateau de fixation (12) généralement à l'extrémité du levier d'application opposée à la liaison avec l'écrou non rotatif (44).

5. Frein à tambour actionné électriquement selon l'une quelconque des revendications 1 à 4, dans lequel la vis de transmission (40) est reliée par un train d'engrenages (80, 100) avec le moteur électrique (74), et dans lequel le moteur électrique possède un arbre (82) monté en général parallèlement à la vis de transmission, le tambour (84) étant relié de manière fixe avec l'arbre.

6. Frein à tambour actionné électriquement selon l'une quelconque des revendications 1 à 5, dans lequel le dispositif d'actionnement du mécanisme de frein de stationnement (78) est actionné électriquement.

7. Frein à tambour actionné électriquement selon l'une quelconque des revendications 1 à 5, dans lequel le dispositif d'actionnement du mécanisme de frein de stationnement (78) est actionné mécaniquement.

8. Frein à tambour actionné électriquement selon l'une quelconque des revendications 1 à 7, comprenant en outre un appareil de réglage (24, 70) pour régler la distance entre les patins de frein (20, 21).
